# EUROPEAN PATENT APPLICATION

(11) **EP 4 834 799 A1**
(43) Date of publication of application: **04.11.2026**
(21) Application number: 25173415.8
(22) Date of filing: 29.04.2025
(51) Int. Cl.: B65G 1/04

(54) **METHOD OF OPERATING A ROBOTIC VEHICLE**

(71) Applicant: AutoStore Technology AS, 5578 Nedre Vats (NO)
(72) Inventor: Strømme, Erik, 5578 Nedre Vats (NO); Gruenbeck, Uwe, 5578 Nedre Vats (NO); Fitje, Martin, 5578 Nedre Vats (NO); Brune, Ellen, 5578 Nedre Vats (NO)
(74) Representative: Kilburn & Strode LLP

(57) **Abstract**

The disclosure relates to a method of operating a robotic vehicle in an automated storage and retrieval system, the automated storage and retrieval system comprising a grid, the grid comprising a frame having a plurality of vertical columns in which storage containers can be stacked on top of each other, said vertical columns being between vertical frame members of the grid, wherein the robotic vehicle is enabled to move across the top of the grid between the vertical columns, the robotic vehicle being arranged for retrieving storage containers by lifting them out of the vertical columns and for storing storage containers by lowering them into the vertical columns, wherein the method comprises: identifying for retrieval, a storage container that is stored at a first position in a first one of the vertical columns of the grid, wherein the identifying is based upon at least one criterion of a first set of criteria being met; causing the robotic vehicle to retrieve the identified storage container from the first position; and causing the robotic vehicle to store the identified storage container at a second position different from the first position, in a second one of the vertical columns of the grid.

## Description

### TECHNICAL FIELD

The disclosure relates to a method of operating a robotic vehicle for storing and retrieving storage containers in an automated storage and retrieval system, a controller for said robotic vehicle wherein the controller comprises one or more processors programmed to carry out the method, an automated storage and retrieval system comprising one or more of said robotic vehicles and one or more processors programmed to perform the method, a computer program comprising instructions which when executed by one or more processors cause performance of the method, and a computer-readable medium storing said computer program.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

The containers (otherwise termed "bins") are typically constructed from a plastics material, for cost and ease of manufacture reasons. For example, plastics materials can be injection-moulded at relatively low cost compared to fabricating containers from sheet metal. Plastic containers possess other advantages such as relatively low weight, durability (e.g. resistance to dents and corrosion), and ease of handling (e.g. they can easily be made without sharp corners that could injure operators that from time to time need to handle the containers e.g. when said containers are at a packing port and their contents are being accessed).

A problem has been encountered with existing automated storage and retrieval systems, in that it has been found that sometimes containers can become damaged (e.g. deformed) when they are used in such automated storage and retrieval systems. The present application addresses that problem.

### SUMMARY

One or more aspects of the invention of the present application are set out in the claims.

In a first example, there is provided a method of operating a robotic vehicle in an automated storage and retrieval system, the automated storage and retrieval system comprising a grid, the grid comprising a frame having a plurality of vertical columns in which storage containers can be stacked on top of each other, said vertical columns being between vertical frame members of the grid, wherein the robotic vehicle is enabled to move across the top of the grid between the vertical columns, the robotic vehicle being arranged for retrieving storage containers by lifting them out of the vertical columns and for storing storage containers by lowering them into the vertical columns, wherein the method comprises:
identifying for retrieval, a storage container that is stored at a first position in a first one of the vertical columns of the grid, wherein the identifying is based upon at least one criterion of a first set of criteria being met;
causing the robotic vehicle to retrieve the identified storage container from the first position; and
causing the robotic vehicle to store the identified storage container at a second position different from the first position, in a second one of the vertical columns of the grid.

Optionally, the second position is at a top of a stack of containers in the second one of the vertical columns.

Optionally, the second position is selected to be a position in the grid where it is determined that reduced stress will be experienced by the identified storage container at least for a period of time, compared with stress experienced by the identified storage container when stored at the first position.

Optionally, the first set of criteria comprises one or more of:
a time for which the identified container has been stored at the first position exceeding a first time period;
a weight supported by the identified container, that weight being a total weight of containers above the identified container in the first one of the vertical columns, exceeding a first weight limit at the first position;
a weight supported by the identified container, that weight being a total weight of containers above the identified container in the first one of the vertical columns, exceeding a second weight limit at the first position for a second time period, wherein the second weight limit is lower than the first weight limit;
a combination of a weight supported by the identified container at the first position, and a time for which the identified container has been stored at the first position, exceeding a combined threshold;
a number of containers supported by the identified container at the first position exceeding a first container number limit; and
a distance of the first position from a top of the storage grid being greater than or equal to a first storage depth limit.

Optionally, one or more of the criteria in the first set is adjusted according to a temperature at which the identified container is stored at in the first position. Further optionally, the combination is an integral of weight versus time, and optionally weight and/or time are non-linearly scaled.

Optionally, the second position is a position in the grid at which at least one criterion of a second set of criteria are met, wherein the second set of criteria comprises one or more of:
a total weight of containers in the second one of the vertical columns above the second position being projected to be less than a total weight of containers in the first one of the vertical columns above the first position, at least for a predetermined time period;
a total weight of containers projected to be supported by the identified container at the second position in the second one of the vertical storage columns, at least for a predetermined time period, being less than a third weight limit;
a number of containers projected to be supported by the identified container at the second position being less than a number of containers supported by the identified container at the first position;
a number of containers projected to be supported by the identified container at the second position being less than or equal to a second container number limit;
a measure of robot traffic density above the second one of the vertical storage columns being below a traffic density limit;
a robot travelling distance between the first one of the vertical columns and the second one of the vertical columns being below a robot travelling distance limit;
a distance of the second position from a top of the storage grid being less than or equal to a second storage depth limit;
an average height of stacked containers in the second one of the vertical columns, as determined over a predetermined averaging time, being below an average stack height limit; and
a horizontal distance of the second position from a packing station or port being above a port distance threshold.

Optionally, one or more of the projections are based upon historical operating records.

Optionally the third weight limit is less than a total weight of containers supported by the identified container when at the first position.

Optionally the second storage depth limit is predetermined or is selected to be less than a distance from the first position to the top of a stack of containers in the first one of the vertical columns.

Optionally, the method further comprises storing, for each storage container, a history of stress experienced by it versus time, and based on the history, adjusting one or more of the limits involved in the second set of criteria based on the history. Optionally one or more of the limits involved in the second set of criteria is adjusted according to a temperature at which the identified container has been stored at in the first position. Optionally one or more of the limits involved in the second set of criteria is adjusted according to a temperature at which the identified container will be stored at in the second position.

Optionally, the method further comprises storing, for each storage container, a history of stress experienced by it versus time, and based on the history, making a maintenance decision relating to the respective storage container based on that stored information.

Optionally, the method further comprises identifying each storage container with a unique identifier. Optionally, the unique identifier is attached to a respective storage container using at least one or a barcode and an RFID tag.

Optionally, the step of identifying is based upon all of the criteria of the first set of criteria being met.

Optionally, the second position is a position in the grid at which all of the criteria of the second set of criteria are met.

Optionally, the method further comprises determining a vertical position in the grid below which a total weight of containers stacked above that vertical position in a respective stack is statistically determined to be likely above a threshold weight which if exceeded can result in containers lower in the stack being damaged over a predetermined time period, and wherein the first set of criteria comprises the first position being at or below that determined vertical position. Optionally, the determining is performed separately for each vertical column in the grid.

Optionally, the method is repeated each time that a predetermined time period elapses.

Optionally, following the step of identifying a storage container for retrieval, the steps of causing the robotic vehicle to retrieve the identified storage container and causing the robotic vehicle to store the identified storage container are deferred until a predetermined number of storage containers have been identified or a scheduled time arrives.

Optionally, the method is repeated while it is determined that at least one criterion of the first set of criteria is met.

Optionally, the first one of the vertical columns is the same vertical column or a different vertical column as the second one of the vertical columns.

In a second example there is provided a controller for a robotic vehicle for operation in an automated storage and retrieval system, the automated storage and retrieval system comprising a grid, the grid comprising a frame having a plurality of vertical columns formed between vertical frame members, in which vertical columns the storage containers can be stacked on top of each other, wherein the robotic vehicle is enabled to move across the top of the grid between the vertical columns, the robotic vehicle being arranged for lifting storage containers out of the vertical columns and for lowering storage containers into the vertical columns via respective openings above the vertical columns, wherein the controller comprises one or more processors programmed to carry out a method according to that defined in the first example.

In a third example there is provided an automated storage and retrieval system comprising a grid, the grid comprising a frame having a plurality of vertical columns formed between vertical frame members, in which vertical columns the storage containers can be stacked on top of each other, the system further comprising one or more robotic vehicles enabled to move across the top of the grid between the vertical columns, the one or more robotic vehicles being arranged for lifting storage containers out of the vertical columns and for lowering storage containers into the vertical columns via respective openings above the vertical columns, and the automated storage and retrieval system further comprising one or more processors programmed to carry out the method of the first example.

In a fourth example, there is provided a computer program comprising instructions which, when executed by a processor of a device, cause the device to perform the method of the first example.

In a fifth example, there is provided a computer-readable medium storing the computer program of the fourth example.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a process flow diagram, illustrating an example of the method disclosed herein.

### DETAILED DESCRIPTION

In overview, the disclosure relates to a method of operating a robotic vehicle for an automated storage retrieval system, a controller arranged for controlling robotic vehicles according to said method, an automated storage and retrieval system comprising such a controller and robotic vehicles, and a computer program and computer-readable medium storing such a computer program, which program is arranged to cause one or more processors to carry out steps of the method.

In arriving at the disclosed method, it has been realised by the inventors that one cause of the damage to the containers, that has been witnessed in operation of such an automated storage and retrieval system, is when a particular container remains stored at a low level in a stack within the grid for an extended period of time. It has been realised that this can occur, for example, when a container contains items that are rarely called for to be accessed at a packing port, such as slow-moving inventory items, or indeed when a container is empty and so is not retrieved from the stack for an extended period of time. It has been further realised that as the automated storage and retrieval system operates, i.e. as containers holding items that are requested to be accessed at a packing station are retrieved from the grid, transported to the packing station, optionally accessed by an operator, and returned to the grid, those accessed containers tend to be retrieved from whatever level they were at in their respective stack, and then returned to the grid at a top of a stack. Any containers that were overlaying (i.e. stacked on top of, either directly on top of or merely higher in the same stack of containers) the container that was requested to be accessed, must be at least temporarily moved out of the way by removing them from the vertical storage column containing the requested container and placing them elsewhere in the grid, before either those moved containers are returned to the vertical storage column from which they were moved (typically one container level downwards, since the requested container has been removed), or that vertical storage column is refilled with other containers. Thus, the non-requested containers in the subject vertical storage column tend to migrate lower and lower in their respective container stacks.

The inventors have realised that containers that are infrequently accessed tend to migrate to a relatively low level in their respective stack, and remain there for an extended period of time, whereupon the weight of other containers in that stack bears upon the lower, infrequently accessed, containers for an extended period of time. It has been realised that this can be especially problematic when containers are made of a plastics material, although problems can also occur when containers are made from other materials such as metals. For example, such containers may be damaged rapidly if a weight bearing on them exceeds a first weight threshold. Said containers may also be able to withstand a weight less than the first weight threshold but greater than a second weight threshold for a particular time period (but the container material may creep over time if the second weight threshold is exceeded, such that they are unable to remain in their original, i.e. "correct", shape according to predefined dimensional tolerances for more than a certain time period). Said containers may also be able to indefinitely withstand a weight less than the second weight threshold. The particular time period may reduce as the weight increases, according to a linear or non-linear relationship. Containers made from such material may also recover their original shape (i.e. to within the predefined dimensional tolerances) over time once the weight is relieved from them, but may never fully recover if the amount of deformation incurred is too great and/or if the time for which they were deformed is too great. The time period for recovery may correspond to the amount of deformation. Temperature may also affect one or more of: the weight limits/thresholds, the time period taken for deformation of the container shape such that it is outside of the predefined dimensional tolerances, and the time period taken for recovery of the container shape such that it is within the predefined dimensional tolerances. For example, the weight limits/thresholds and the time periods may reduce as temperature increases. The disclosed method has been arrived at in the light of the above inventive insights that have been realised by the inventors.

In general, the disclosed method comprises: identifying for retrieval, a storage container that is stored at a first position in a first one of the vertical columns of the grid, wherein the identifying is based upon at least one criterion of a first set of criteria being met; causing the robotic vehicle to retrieve the identified storage container from the first position; and causing the robotic vehicle to store the identified storage container at a second position different from the first position, in a second one of the vertical columns of the grid.

Such a method can be used to operate a robotic vehicle (such as a robotic container storage and retrieval vehicle) in an automated storage and retrieval system of the type which comprises a grid having a plurality of vertical columns in which storage containers can be stacked on top of each other. In such a system, said robotic vehicle is enabled to move across the top of the grid between the vertical columns, and is configured to retrieve (or arranged for retrieving) storage containers by lifting them out of the vertical columns and configured to store (or arranged for storing) storage containers by lowering them into the vertical columns.

The method can be carried out by a controller of said automated storage and retrieval system, such that one or more robotic vehicles are caused to identify and retrieve at least one container (such a container is one that is deemed at risk from stress-induced deformation caused by the weight of other containers overlaying that container in its respective stack) and store that one or more container back into the storage grid (otherwise termed "re-storing" that container) at a new location that is higher in the grid and at which the container is therefore likely to be under reduced stress (by virtue of it being likely that fewer containers are stacked above it in its new location).

The controller can comprise one or more processors arranged to execute instructions of a computer program, and the system can comprise the controller. The method can be implemented by a computer program comprising instructions which when executed by the one or more processors causes them to execute the method, and said computer program can be stored on a computer-readable medium such as a non-transitory computer-readable medium, such as a memory device (e.g. a flash memory, an optical or magnetic disk).

By way of a non-limiting example, a storage container (otherwise termed a "bin") can be identified for retrieval because e.g. it has been stored at the first position for longer than a predetermined time period, in which case it is likely that the bin has not been retrieved for a relatively long time and thus it is likely that other bins in the same vertical storage column have been retrieved more recently, leading to a tendency for the identified bin to have sunk down towards a bottom of the storage column.

This "sinking down" of bins tends to happen during operation of such an automated storage and retrieval system, because every time a particular bin is retrieved from a particular storage column, overlaying bins above it ("overlaying bins" means "bins" or "containers" that are stacked either directly on top of the particular bin or placed higher in the same stack of bins in which the particular bin is stacked) have to be temporarily removed from the particular storage column, in order that the particular bin that is to be retrieved can be accessed. The overlaying bins are then typically replaced into the particular storage column, or into empty spaces in neighbouring storage columns, such that eventually the particular storage column is refilled with bins, and thus those bins which were not accessed and were below the particular bin that was retrieved, stay low down in the stack of bins in that particular storage column and never rise up again until they happen to be retrieved. Only bins that are retrieved have a chance of being moved into a higher position in a stack of the storage grid than the position at which they were before retrieval, and bins that are not retrieved may have additional bins stacked on top of them (up to a limit when the maximum stack height of bins in the storage column in which they are stored is reached). Thus, bins that are rarely accessed tend to remain low down in the storage grid, and tend to experience higher and longer-term stress as a result of the weight of overlaying bins bearing down on them for extended periods of time. It has been realised that this is a major cause of damage and/or deformation to bins/containers.

By, for example, selecting bins for retrieval that have not been retrieved (i.e. have been stored at the first location) for longer than a predetermined time period, which are therefore bins that have therefore likely sunk downwards in their respective storage column and have thus been subject to relatively high and long-term stress, such bins can be retrieved and then returned to the storage grid at a higher position (e.g. at the top of the same storage column or the top of another storage column) in the storage grid than they were located at previously, and thereby at least some of the stress that they were previously under can be relieved.

This is particularly advantageous with bins that are constructed from a plastics material (which is commonly used for bins because of its low cost, light weight, and ease of manufacture e.g. by injection moulding), because such plastics materials can buckle under excessive load, e.g. they can suddenly deform if a weight/force bearing on them exceeds a first weight limit, and because such plastics materials can creep (i.e. gradually deform) even when subjected to a lesser weight/force (i.e. a weight/force that exceeds a second weight limit that is lower than the first weight limit) if subjected to such a weight/force for a long time period. Additionally, such weight/force limits and time periods typically reduce as temperature increases.

By identifying bins that are subject to such potentially damaging conditions, retrieving them, and storing them at a new position that tends to be higher than the position from which they were retrieved from (by virtue of the way that bins are always returned to the top of a respective stack), stress from the weight of overlaying bins is relieved from said retrieved bins, which can not only prevent or at least reduce deformation damage to the bins, but can also permit such bins to "spring back" into shape (this is a property that has been observed in bins made of typical plastics materials, e.g. polypropylene, polystyrene or nylon, optionally glass-reinforced). Advantages resulting from the methods disclosed herein thereby include reduced damage to bins, increased operational reliability, increased permitted maximum height and/or weight of bin stacks in the storage columns (by virtue of permitting increased weight/stress for a limited period of time that it is ensured is not exceeded), and lowered operating costs. Such advantages can also be realised when using bins made from other materials such as metal, e.g. pressed steel or cast aluminium-based alloy, to a greater or lesser degree in accordance with their relative material properties.

By way of a non-limiting example, typically a controller tracks all bin locations and can cause robotic container-carrying vehicles to temporarily remove other bins from a destination storage column (called "digging"), down to a particular depth in that column, then store a particular bin at that particular depth, before refilling the space in the column above that particular bin with other bins, such that any bin can be stored at any desired position in the grid in accordance with a decision of the controller. It will be understood that at the time when a bin is stored in the grid, it is typically placed at the top of a stack of bins in a particular vertical storage column, even if immediately afterwards one or more other bins may be stored on top of it. That is because each bin in a stack of bins is supported by the bins beneath it, and it follows that a bin that is in the process of being stored in a stack must logically be the uppermost bin in that stack, even if it might subsequently have another bin placed upon it. Thus, as a simpler alternative to a possible implementation wherein the controller specifically chooses a precise location for storage of a particular bin, in this simpler alternative example: when a particular bin has been removed from the grid due to it being deemed at risk of damage from excessive stress, it remains advantageous to simply store that particular bin at the top of any storage column because that at least temporarily places the particular bin at a higher location in the storage column into which it has been re-stored, and thereby gives the particular bin an opportunity to spring back into its correct shape, or at least gives the particular bin a period of respite which helps to avoid it becoming damaged. While one criterion for identifying a bin for retrieval (a bin having been stored at the first location for longer than a predetermined time period) has been discussed in this non-limiting example, other criteria can be used, either singly or in any combination as will be further described below.

Thus as a result of the method disclosed herein, there is provided a reduction in damage to containers resulting from the weight of containers bearing down on lower containers, and thus the maximum number of containers stacked in a vertical storage column can be increased, such that it follows that the maximum allowable height of a storage grid can be increased, leading to more efficient use of space within a given storage site building. Additionally or alternatively, the maximum allowable weight of items in a given container can be increased, leading to more storage flexibility and more storage capacity within a given storage site building. Greater reliability also results by virtue of reduced container damage incidence. Thus, real estate costs, and consequently operating costs, can be reduced.

### Automated storage and retrieval system overview

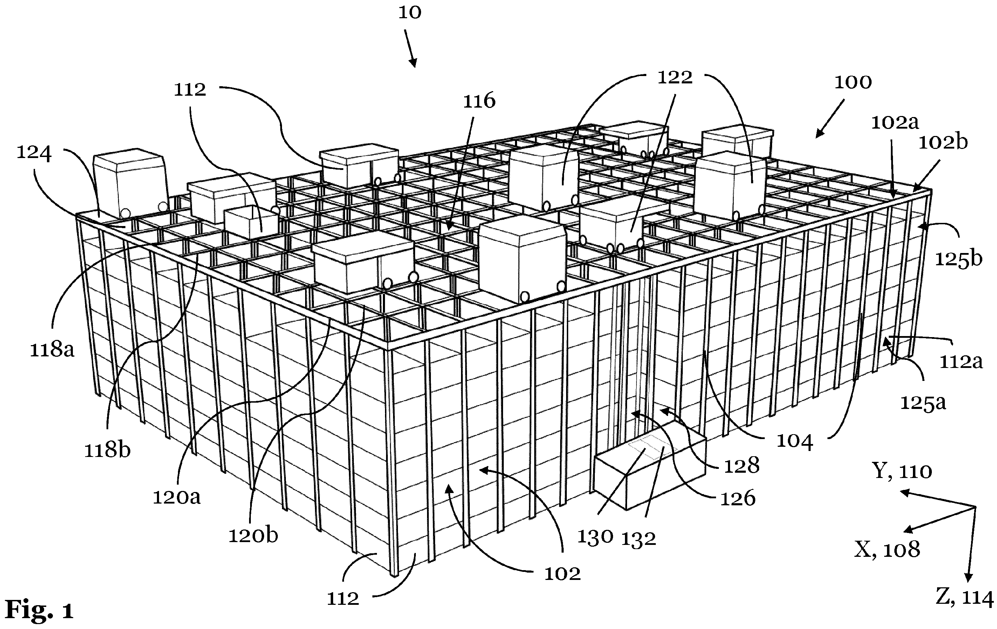

Referring to the example automated storage and retrieval system 10 shown in Fig. **1****,** a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

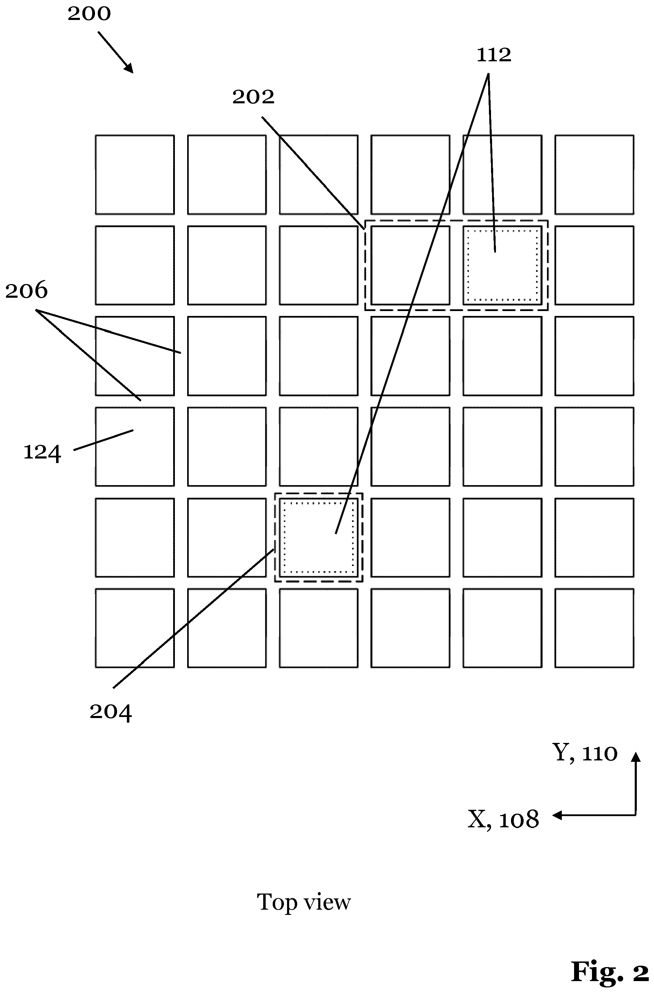

Referring to the example shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

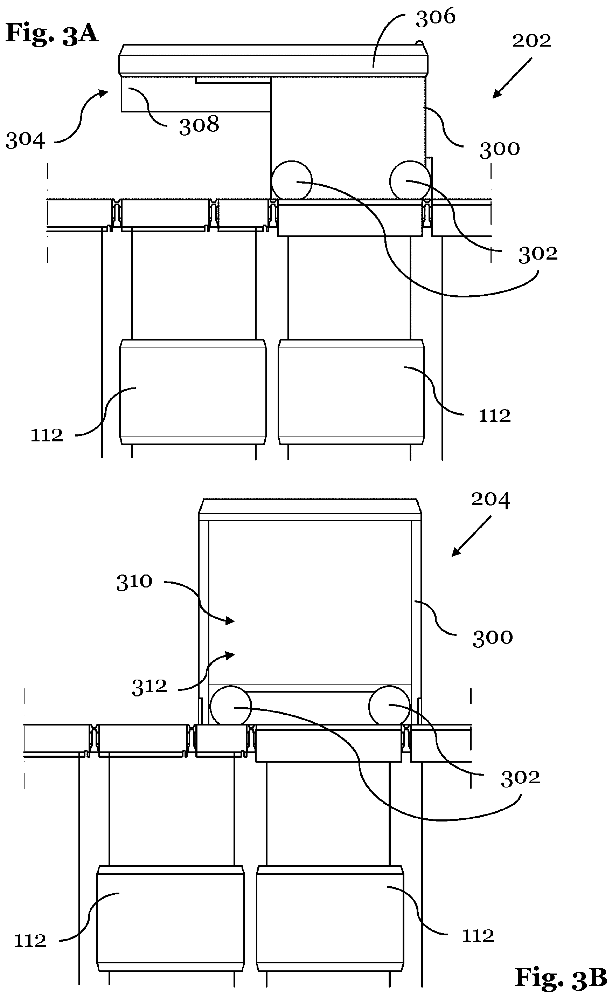

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

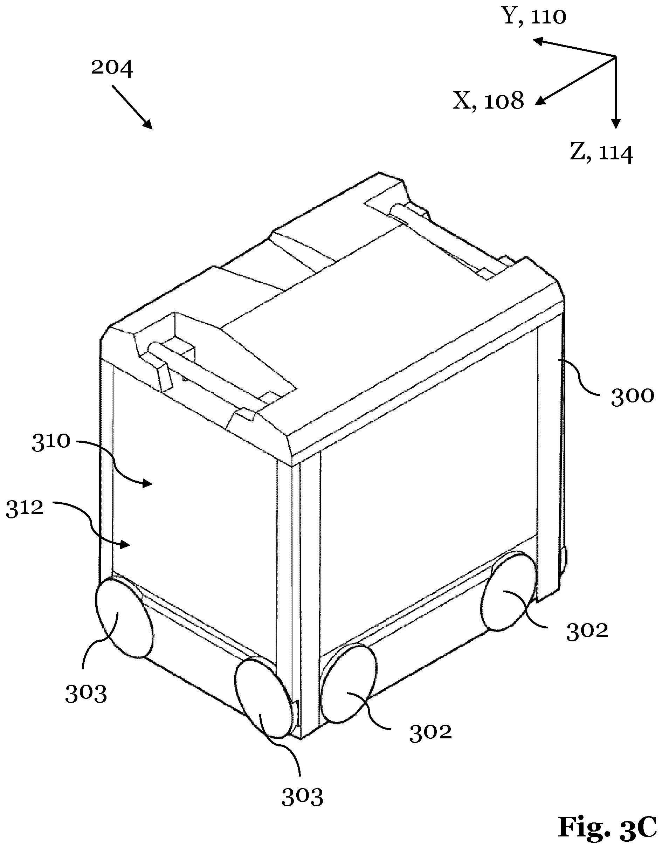

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

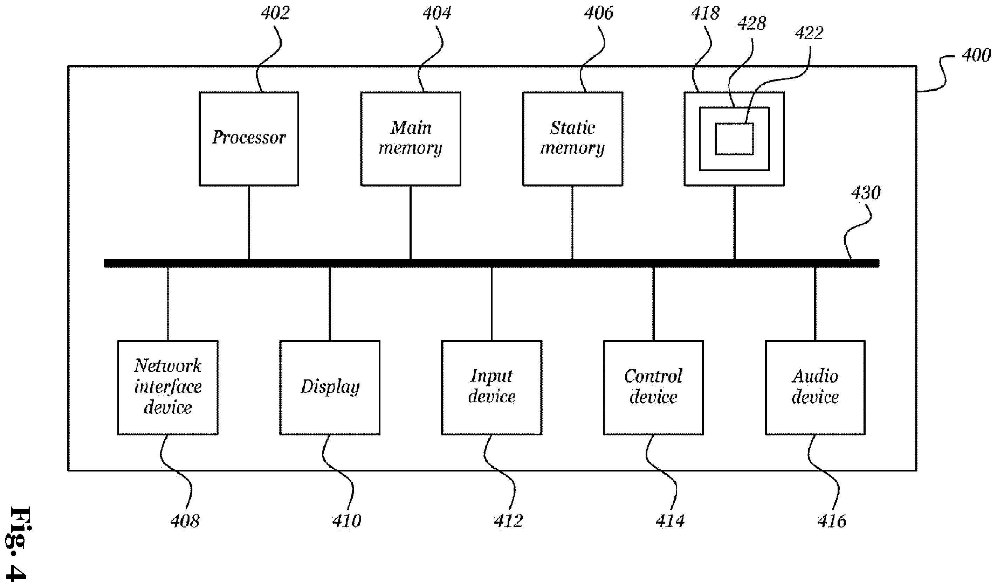

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is typically (but optionally) given a unique identifier, which may be marked on the bin 112 using a computer-readable identifier (e.g., a barcode, quick-response code or radio-frequency identification tag) to ease identification of the bin 112. A database, e.g. maintained by the processing system 400, can be used to store, in association with the unique identifier, the position and, optionally, content of each bin 112. When a bin 112 is moved (e.g., when it is retrieved from the grid 100), the database is updated to record the bin's change in position.

When it is desired to retrieve a bin 112 from the grid 100, under control of a system controller (e.g. the processing system 400), a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

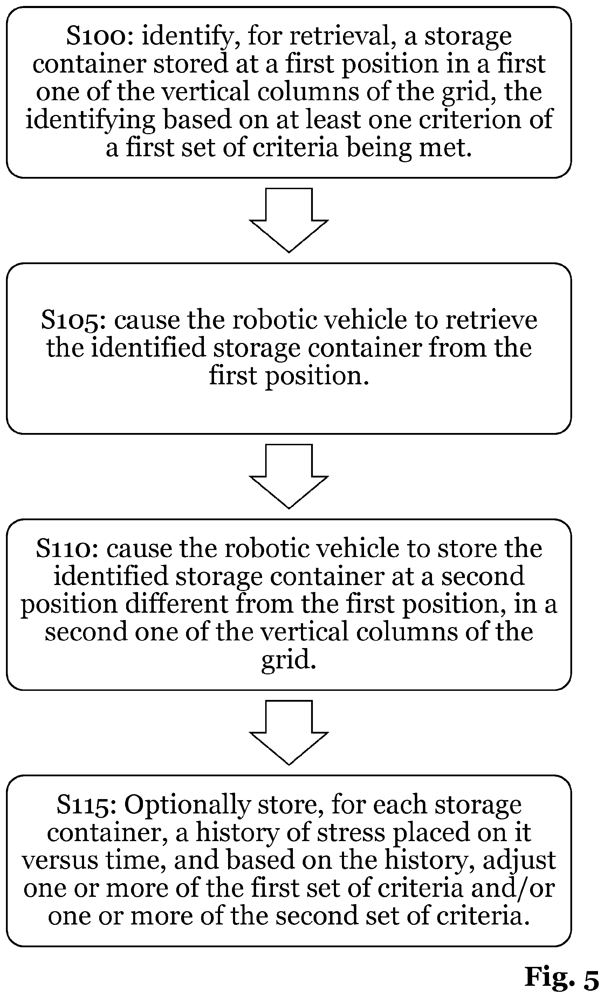

Referring to Fig. 5, a method of operating a robotic vehicle in an automated storage and retrieval system 10 will now be described. As illustrated in Fig. 1, said automated storage and retrieval system 10 is of the type comprising a grid 100, the grid 100 comprising a frame having a plurality of vertical columns 102 in which storage containers 112 can be stacked on top of each other, said vertical columns 102 formed between vertical frame members 104 of the grid 100, wherein the robotic vehicle 122 is enabled to move across the top of the grid 100 between the vertical columns 102 (for example, a rail system 116 can be supported on vertical frame members 104 that can be interspersed between the vertical storage columns 102, wherein the rail system 116 supports the robotic vehicles 122 which can travel on the rail system 116 in X and Y horizontal directions above the storage columns 102). Such a robotic vehicle 122 is arranged for retrieving storage containers 112 by lifting them out of the vertical columns 102 and for storing storage containers 112 by lowering them into the vertical columns 102 (for example, the robotic vehicle 122 can have rolling means or wheels 302, 303, by which it is enabled to travel on the rail system 116, and the vehicle 122 can further have a lifting device 304, 312 by which means it can lift storage containers 112 into and out of vertical storage columns 102 of the storage grid 100). Fig. 1 shows storage positions 125a, 125b in the grid 100 at which storage containers 112 may, at times, be stored. Said storage positions 125a, 125b are located in the storage columns 102 which are accessed via openings in the grid 100, said openings being between rails of the rail system 116.

In this context, the following method is provided which can, for example, be executed by a controller ("system controller") of said automated storage and retrieval system 10. Such a controller can comprise one or more processors 402, and the method can be carried out by said one or more processors 402 executing a computer program comprising instructions which are so arranged. Such a computer program can be stored on a non-transitory computer-readable medium such as a memory device 404, 406 (e.g. flash memory, optical or magnetic disk). Such a controller can be provided separately for use in such a system 10, or can be provided as part of such a system 10, and/or such a computer program can be provided as a computer program product, e.g. on a computer-readable medium.

Step S100 comprises identifying for retrieval, a storage container 112 that is stored at a first position 125a in a first one 102a of the vertical columns 102 of the grid 100, wherein the identifying is based upon at least one criterion of a first set of criteria being met. By way of non-limiting example, the first position 125a may be at a relatively low level in the first one 102a of the vertical columns 102 of the grid 100, at which the identified storage container 112 may be subject to a relatively high weight bearing down on it from a relatively large number of other containers 112 that may be stacked above the identified storage container 112. Such a relatively high weight results in relatively high mechanical stress on the identified storage container 112, which could result in deformation/damage to the identified storage container 112, and therefore identification of such a storage container 112 at the first position 125a advantageously identifies a storage container 112 that should be lifted so as to prevent damage to it.

Step S105 comprises causing the robotic vehicle 122 to retrieve the identified storage container 112 from the first position 125a. For example, a controller of the automated storage and retrieval system 10 may signal via a wireless radio link to a robotic vehicle 122 that the robotic vehicle 122 should move to above the first one 102a of the storage columns 102 and retrieve the identified storage container 112 from the first one 102a of the storage columns 102 and temporarily store the identified storage container 112 in a cavity 310 of the robotic vehicle 122, before executing step S110. If the identified storage container 112 is not at the uppermost level (top) of the stack of containers 112 in the first one 102a of the storage columns 102, then the robotic vehicle 122 can, either autonomously or under command of the system controller, remove each of the containers 112 that are overlaying the identified storage container 112, and one-by-one, place each of the overlaying containers 112 into another location (at least temporarily, before optionally returning them to the first one 102a of the storage columns 102), such that the identified container 112a can be accessed. Actions of the robotic vehicle 122 can be under control of the system controller, and/or can be autonomous (i.e. under control of a local controller of the robotic vehicle) to at least a degree, with the robotic vehicle 122 communicating with the system controller and/or other robotic vehicles 122.

Step S110 comprises causing the robotic vehicle 122 to store the identified storage container 112 at a second position 125b different from the first position 125a, in a second one 102b of the vertical columns 102 of the grid 100. For example, the controller of the system 10 can cause the robotic vehicle 122 to store the identified storage container 112 by sending a command to the vehicle 122 by a wireless radio link, and/or the robotic vehicle 122 can operate at least partially autonomously while communicating with the system controller and/or other robotic vehicles 122.

Preferably, the second position 125b is selected to be a position in the grid 100 where it is determined that reduced stress (e.g. deformation influences such as mechanical stress or temperature stress) will be experienced by the identified storage container 112 at least for a period of time, compared with stress experienced by the identified storage container 112 when stored at the first position 125a. For example, the second position 125b can be a position where there are fewer overlaying containers 112 and therefore on average the total weight of those containers tends to be less than the total weight of containers bearing on the identified container 112a while at the first position 125a, or the individual weights of containers may be tracked and known by the system controller such that the total weight of containers above the identified container 112a in the first 125a and second 125b positions can be calculated in which case the second position 125b can be selected to have less weight bearing on the identified container 112a than at the first position 125a. Alternatively or additionally, the second position 125b can be selected as a location at which the identified container 112a will be subject to less temperature stress than at the first location 125a, or any logical combination of such factors. In one simple non-limiting example, the second position 125b can be at a top (uppermost position) of a stack of containers in the second one 102b of the vertical columns 102, which is simple from a control point of view because this option for the second position 125b can be chosen simply as a matter of policy, without needing to calculate weights/times etc., and is advantageous because at the top of a stack of containers, there are (at least temporarily) no containers bearing down on the identified storage container 112, and so the identified storage container 112 has some time to recover from any deformation that it might have accumulated at the first position 125a from being crushed by the weight of overlaying containers 112. Particularly with containers made of material that exhibits creep under load, this can allow such containers to "spring back" gradually to substantially their original shape, reducing occurrence of permanent damage/deformation. Any reduction in weight bearing on a container can help produce such a restorative effect.

Optionally step S115 can be included, which comprises storing, for each storage container 112, a history of stress experienced by it versus time, and based on the history, adjusting one or more of the first set of criteria and/or one or more of the second set of criteria based on the history. For example, each storage container 112 used in the system 10 can be given a unique identifier by the system's controller, and the weight of every container 112 can be recorded against its respective unique identifier, e.g. in a database that e.g. can be maintained by the system controller. For example, every time a container 112 is loaded or unloaded at a packing station or port 130, 132 the container 112 can be weighed and a database entry for that container 112 can be updated by the system controller, and then (given the known weights of every container 112 and given that the location of every container 112 is recorded by the controller) a weight bearing down on any particular container 112 can be calculated as the sum of the weights of all of the containers 112 that are overlaying, i.e. sitting on top of, that particular container. Thus, the system controller can know what weight/stress each container is experiencing from overlaying containers at any particular time, and the controller can calculate either a simple product of weight multiplied by time, or an integral of weight versus time (and optionally weight and/or time can be non-linearly scaled, since e.g. a weight over a plastic deformation limit might be disproportionately damaging compared with a weight below such a limit which might merely cause temporary elastic deformation). These factors can thus be recorded and used to adjust the first set of criteria (e.g. higher stresses experienced by a particular container 112 can be used to reduce weight and/or time thresholds in the first set of criteria, and thereby raise the likelihood that the particular container 112 will be selected to be moved to a higher location in the grid 100), and/or to adjust the second set of criteria (e.g. containers that have been subject to higher stresses can be given a more preferable second position 125b associated with lower stresses, by adjusting the thresholds and/or weights in the second set of criteria so that only candidate locations that have particularly low associated stresses will satisfy the second set of criteria), such that containers that have experienced particularly high levels of stress are thereafter treated gently, while containers 112 that have not (so far) experienced such high levels of stress are treated less gently with the expectation that they should be able to take such stress without failure. Thus, better use of the available containers 112 and storage space in the grid 100 is made, leading to greater efficiency and reliability.

Such stresses can also include temperature, since higher temperatures tend to soften the material that the containers 112 are made from, and therefore make the material less resilient to mechanical forces. Thus, the first set of criteria can be adjusted (e.g. de-rated) according to a temperature at which the identified container 112a is stored at the first position, and/or the second criteria can be adjusted (e.g. de-rated) according to a temperature at which the identified container 112a will be stored at the second position, for example maximum weights and/or maximum number of containers permitted to be above the identified container 112a in either or both of the first and second positions 125a, 125b can be reduced as temperature increases at the respective positions.

By way of a non-limiting example, the first set of criteria can comprise the first position 125a being at or below a vertical position in the grid 100 that is determined to be a vertical position below which a total weight of containers stacked above that vertical position in its respective stack is statistically determined to be likely above a threshold weight which if exceeded can result in containers lower than the vertical position in the stack being damaged over a predetermined time period (the predetermined time period can be zero, e.g. if such a weight would cause immediate damage, and the vertical position can optionally be determined for the whole or a subsection of the grid 100, or for each individual column 102). The statistical determination can be based upon historical operating data previously gathered and stored for containers against their unique identifiers in a database.

Additionally or alternatively, the first set of criteria can comprise one or more of the following criteria (either singly or in any combination - i.e. the disclosed method can identify a container to be moved based on all of the following criteria, upon a combination of some of the following criteria, or based on any single one of the following criteria):
a time for which the identified storage container 112 has been stored at the first position 125a exceeding a first time period (as explained above, this criterion tends to indicate a likelihood of the identified container 112a being stored at a relatively low level with relatively high weight of other containers 112 bearing down on it, and as such is a relatively simple criterion that requires minimal processing power to determine whether or not it has been met);
a weight supported by the identified container 112a, that weight being a total weight of other containers 112 above the identified container 112a in the first one of the vertical columns, exceeding a first weight limit at the first position (this criterion being a direct indication of whether or not excessive weight is bearing on the identified container 112a, and being calculated e.g. by summing known or estimated weights of other containers 112 above the identified container 112a in the same stack, it being possible to track each container's position and current weight by recording those values in a database entry for each container's unique identifier - tracking of individual container weights requires more processing but provides more accurate determination of total weight and therefore more reliable prevention of container damage, while estimation of container weights may provide acceptable performance while reducing processing power requirements);
a weight supported by the identified container 112a, that weight being a total weight of other containers 112 above the identified container 112a in the first one of the vertical columns 102, exceeding a second weight limit at the first position 125a for a second time period, wherein the second weight limit is lower than the first weight limit (using this criterion can allow the system 10 to permit additional weight to be borne by containers 112, in excess of the weight that containers 112 can bear indefinitely without deformation, by ensuring that such additional weight is not borne by containers 112 for a time period that would result in creep of the container material exceeding a maximum permissible amount of deformation, and thus the storage system 10 can employ taller stacks of containers 112 thereby increasing storage capacity);
a combination of a weight supported by the identified container 112a at the first position 125a, and a time for which the identified container 112a has been stored at the first position 125a, exceeding a combined threshold (e.g. a multiplication product of weight and time, or a more sophisticated measure such as an integral of weight versus time - such a combination considers both the level of weight and/or excess over a weight that can be borne indefinitely, and the time for which said weight and/or excess is borne, such that e.g. a large excess for a relatively short time can be permitted while a small excess can be permitted for a relatively long time, and thus the controller can advantageously track the weight of every container 112 and ensure that no container 112 bears an excessive weight for an excessive length of time, thereby more effectively preventing container damage and making more efficient use of the available storage space on any particular storage site);
a number of other containers 112 supported by the identified container 112a at the first position 125a exceeding a first container number limit (this criterion can be used as a simple measure of the stress borne by the identified container 112a, e.g. if an estimated container weight is multiplied by the number of containers, and this advantageously does not require tracking of individual container weights); and
a distance of the first position 125a from a top of the storage grid 100 being greater than or equal to a first storage depth limit (this criterion can be used as a simple measure of the weight likely to be borne by the identified container 112a, e.g. if an assumption is made about the estimated weight of each container 112, and if it is assumed that on average each vertical storage column 102 is maintained mostly full of containers 112).

By way of a further non-limiting (optional) example, the second position 125b can be at the top of a stack of containers 112 in the second one 102b of the vertical columns 102 (this is simplest from a point of view of required processing power).

Alternatively, the second position 125b can be determined (e.g. by the system controller) to be a position in the grid 100 at which at least one criterion of a second set of criteria are met (either singly or in any combination - i.e. the disclosed method can identify a "second" location 125b for the identified container 112a to be moved to, based on all of the following criteria, or based upon a combination of some of the following criteria, or based on any single one of the following criteria), wherein for example the second set of criteria can comprise one or more of:
a total weight of containers 112 in the second one 102b of the vertical columns 102 above the second position 125b being projected to be less than a total weight of containers 112 in the first one 102a of the vertical columns 102 above the first position 125a, at least for a predetermined time period (the projected total weight of containers 112 can be calculated by summing known weights of the containers 112 that are stored in, or expected to be stored in, the first 102a and second 102b ones of the vertical columns 102, and/or the total weights can be estimated based on an estimated container weight e.g. an average container weight, and based on an actual, estimated or expected number of containers 112 above the identified container 112a in the first 102a and second 102b ones of the vertical columns 102, e.g. the number of containers 112 expected to be stored above the identified container 112a in the second one 102b of the vertical columns 102 can be based upon an assumption that the column 102 is to be completely or almost completely occupied by containers 112 - thus this criterion at least increases the likelihood of a reduction in stress upon the identified container 112a, prolonging its life and delivering increased reliability, lower operating cost, and greater storage capacity);
a total weight of containers 112 projected to be supported by the identified container 112a at the second position 125b in the second one 102b of the vertical storage columns 102, at least for a predetermined time period, being less than a third weight limit (container weights can be determined as in the above criterion, and this criterion can provide that the weight borne by the identified container 112a in its new position in the second one 102b of the storage columns 102 is within a tolerable limit, e.g. below the first and/or second weight limits, such that damage resulting from excessive weight of overlaying containers 112 should not result), the third weight limit optionally being a weight limit that containers 112 can bear indefinitely, or a weight limit that containers 112 can bear for a particular period of time (which can allow greater storage capacity in terms of containers 112 stacked above the identified container 112a, and thus potentially greater grid height and better use of the available space within a storage site in which the grid 100 is located);
a number of containers 112 projected to be supported by the identified container 112a at the second position 125b being less than a number of containers 112 supported by the identified container 112a at the first position 125a (this is a simple measure that does not require tracking of individual container weights, and thus simplifies processing, while providing at least a reduced likelihood of container damage by virtue of at least making it likely that the identified container 112a will bear less weight at the second position 125b - noting that although at the point in operation when the identified container 112a is stored in the second one 102b of the vertical columns 102 there may be no other containers 112 stored above it, the system controller will typically already have a list of containers 112 that are planned to be placed on top of the identified container 112a, and thus the controller will typically have an idea of how many containers 112 are projected to be supported by the identified container 112a at the second position 125b);
a number of containers 112 projected to be supported by the identified container 112a at the second position 125b being less than or equal to a second container number limit (this is another simple measure that does not require tracking of individual container weights, and thus simplifies processing, while providing at least a reduced likelihood of container damage by virtue of at least making it likely that the identified container 112a will bear less weight at the second position 125b - noting that although at the point in operation when the identified container 112a is stored in the second one 102b of the vertical columns 102 there may be no other containers 112 stored above it, the system controller will typically already have a list of containers 112 that are planned to be placed on top of the identified container 112a, and thus the controller will typically have an idea of how many containers 112 are projected to be supported by the identified container 112a at the second position 125b);
a measure of robot traffic density above the second one 102b of the vertical storage columns 102 being below a traffic density limit (this can improve the speed with which the storage containers 112 can be moved from their first position 125a to their second position 125b, by reducing the amount of time that the robotic container handling vehicles 122 have to wait for other robotic vehicles 122 to pass by when operating to retrieve and re-store containers 112 - additionally, traffic density above the second one 102b of the storage columns 102 can be an indication that the second one 102b of the storage columns 102 contains fast-moving stock items in containers 112 that are accessed often, and it can be advantageous to avoid such columns 102 because the identified container 112a would be likely to sink down rapidly in such a column 102 to a low level again, somewhat negating the beneficial effect of the retrieval and re-storing operations performed by the disclosed method);
a robot travelling distance between the first one 102a of the vertical columns 102 and the second one 102b of the vertical columns 102 being below a robot travelling distance limit (it can be advantageous to keep the robot travelling distance as low as possible, so as to reduce to a minimum the time taken by the robotic container handling vehicle 122 to retrieve and re-store the identified container 112a in the grid 100);
a distance of the second position 125b from a top of the storage grid 100 being less than or equal to a second storage depth limit (the closer the identified container 112a is placed to the top of the storage grid 100, the less likely it is to experience a high load from the weight of overlaying containers 112 when it is in the second position 125b, however this factor may be balanced with other needs of the storage system 10 such that e.g. it may be beneficial to re-store the identified container 112a at a height in the second one 102b of the vertical columns 102 that is not at the top of that column 102, but is e.g. perhaps half-way up that column 102, such that it experiences less weight from overlaying containers 112 than it did at the first position 125a, but the second one 102b of the vertical columns 102 can still have its upper positions occupied by containers 112 of fast-moving stock items that frequently need to be accessed, while the identified container 112a does not immediately need to be moved out of the way to access such containers 112 of fast-moving stock items);
an average height of stacked containers 112 in the second one 102b of the vertical columns 102, as determined (e.g. from historical operating data) over a predetermined averaging time, being below an average stack height limit (this criterion can be useful, since a low average stack height can indicate a storage column 102 that is not densely packed or constantly accessed, and thus a storage column 102 that on average has a relatively low stack height can be a good candidate for storing the identified container 112a, in terms of the identified container 112a being less likely to rapidly sink back down that column 102); and
a horizontal distance of the second position 125b from a packing station or port 130, 132 being above a port distance threshold (this criterion can suggest to use such a second position 125b because columns 102 that are close to a packing station or "port" 130, 132 tend to be used for storing containers 112 of fast-moving stock items that need to be accessed frequently, and therefore a second position 125b in a storage column 102b that is at least a threshold distance away from such a packing station or "port" 130, 132 is less likely to be frequently accessed, resulting in an identified container 112a that is stored in such a second position 125b remaining in an elevated position in the second one 102b of the storage columns 102 for a relatively long time, thus giving the container 112 more time to recover, e.g. spring back into shape).

In the optional examples of the previous paragraphs, the "projections" can be made based on historical operating data, e.g. based on historical records of where containers have been stored which allow estimation of numbers of containers that have typically been stored in the second one of the storage columns 102, and/or based on the typical weight that it has been found has been stored in containers 112. Additionally or instead, the projections can be based on data that the controller has about where it plans to store containers 112 in further storage and retrieval operations that it intends to command robotic vehicles 122 to carry out. Advantageously in the optional example of the previous paragraph, the third weight limit can be lower than a total weight of containers 112 supported by the identified container 112a at the first position 125a, and/or lower than the first and/or second weight limits, since that will tend to reject candidate locations for the second position 125b which would not result in the identified container 112a being relieved of at least some of the stress it was under at the first position 125a. Advantageously in the optional example of the previous paragraph, the second storage depth limit can either be predetermined, or alternatively it can be selected to be less than a distance from the first position 125a to the top of a stack of containers in the first one of the vertical columns. When the second storage depth limit is predetermined, it is preferably selected such that candidate locations for the second position 125b are excluded from consideration if they are locations at which the identified container 112a is unlikely (e.g. in accordance with statistically likely container weights and vertical storage column 102 filling/occupancy levels, e.g. as established from historical operating data) to experience lower stresses than at the first location 125a. When the second storage depth limit is selected to be less than a distance from the first position 125a to the top of a stack of containers in the first one 102a of the vertical storage columns 102, this tends to result in selection of a second position 125b at which the identified container 112a will experience lower stress, by virtue of the number of storage locations available above the second position 125b in the second one 102b of the vertical storage columns 102 being less than the number of storage locations available above the first location 125a in the first one 102a of the vertical storage columns, which makes it likely that the total weight of containers above the identified container 112a will be lower at the second position 125b. Further optionally, a maintenance decision can be made depending upon such historical operating data, e.g. a particular storage container 112 can be taken out of service for a period of time, or permanently, and/or can be replaced, depending upon the conditions that the historical operating data shows the container 112 to have been subject to.

Preferably, but optionally, the method of Fig. 5 is repeated periodically, e.g. every time that a predetermined period elapses. Such periodic, as opposed to constant, operation can reduce congestion of robotic vehicles on the grid. For example, the method can be repeated at a particular time each day, such as at a period that is typically a quiet operating period when relatively few storage and retrieval operations are expected to be carried out as part of the normal storage and retrieval function of the system 10, e.g. at night when relatively few product customers are ordering products which then need to be retrieved from the storage system 10. Optionally, the method can be repeated multiple times to identify multiple containers 112 that are to be moved, with step S100 (identifying) executed, but with steps S105 (retrieval) and S110 (re-storage) steps deferred until a trigger occurs (such as a predetermined number of storage containers have been identified, or such as when a predetermined time has elapsed since the last time a container was moved, or such as when a scheduled time arrives such as a time of day when there is typically low robotic vehicle traffic). Optionally, the method is repeated while it is determined that at least one criterion of the first set of criteria is met, or while a particular combination of criteria of the first set of criteria are met, or while a criterion or criteria of the first set of criteria which are of a sufficiently severe predetermined grade are met, or while all criteria of the first set of criteria are met.

Optionally, the first one 102a of the vertical columns 102 is a different vertical column 102 than the second one 102b of the vertical columns 102. When the first 102a and second 102b ones of the vertical columns 102 are different, this can reduce the likelihood that the identified container 112a will rapidly sink down to a stressful lower position again, and can reduce the amount of digging that the robotic vehicles 122 need to do to access more-frequently accessed containers 112 in the first one 102a of the vertical columns 102, although when the first 102a and second 102b ones of the vertical columns 102 are the same then this can reduce the amount of rearrangement of containers throughout the storage system 10 that the controller has to arrange.

The disclosure further includes the examples listed in the following clauses:
Clause 1. A method of operating a robotic vehicle in an automated storage and retrieval system, the automated storage and retrieval system comprising a grid, the grid comprising a frame having a plurality of vertical columns in which storage containers can be stacked on top of each other, said vertical columns being between vertical frame members of the grid, wherein the robotic vehicle is enabled to move across the top of the grid between the vertical columns, the robotic vehicle being arranged for retrieving storage containers by lifting them out of the vertical columns and for storing storage containers by lowering them into the vertical columns, wherein the method comprises:
   identifying for retrieval, a storage container that is stored at a first position in a first one of the vertical columns of the grid, wherein the identifying is based upon at least one criterion of a first set of criteria being met;
   causing the robotic vehicle to retrieve the identified storage container from the first position; and
   causing the robotic vehicle to store the identified storage container at a second position different from the first position, in a second one of the vertical columns of the grid.
Clause 2. The method of clause 1, wherein the second position is at a top of a stack of containers in the second one of the vertical columns.
Clause 3. The method of any one of clauses 1 and 2, wherein the second position is selected to be a position in the grid where it is determined that reduced stress will be experienced by the identified storage container at least for a period of time, compared with stress experienced by the identified storage container when stored at the first position.
Clause 4. The method of any one of clauses 1 to 3, wherein the first set of criteria comprises one or more of:
   a time for which the identified container has been stored at the first position exceeding a first time period;
   a weight supported by the identified container, that weight being a total weight of containers above the identified container in the first one of the vertical columns, exceeding a first weight limit at the first position;
   a weight supported by the identified container, that weight being a total weight of containers above the identified container in the first one of the vertical columns, exceeding a second weight limit at the first position for a second time period, wherein the second weight limit is lower than the first weight limit;
   a combination of a weight supported by the identified container at the first position, and a time for which the identified container has been stored at the first position, exceeding a combined threshold;
   a number of containers supported by the identified container at the first position exceeding a first container number limit; and
   a distance of the first position from a top of the storage grid being greater than or equal to a first storage depth limit.
Clause 5. The method of any one of clauses 1 to 4, wherein one or more of the criteria in the first set is adjusted according to a temperature at which the identified container is stored at in the first position.
Clause 6. The method of clause 4, wherein the combination is an integral of weight versus time, and optionally weight and/or time are non-linearly scaled.
Clause 7. The method of any one of clauses 1 to 6, wherein the second position is a position in the grid at which at least one criterion of a second set of criteria are met, wherein the second set of criteria comprises one or more of:
   a total weight of containers in the second one of the vertical columns above the second position being projected to be less than a total weight of containers in the first one of the vertical columns above the first position, at least for a predetermined time period;
   a total weight of containers projected to be supported by the identified container at the second position in the second one of the vertical storage columns, at least for a predetermined time period, being less than a third weight limit;
   a number of containers projected to be supported by the identified container at the second position being less than a number of containers supported by the identified container at the first position;
   a number of containers projected to be supported by the identified container at the second position being less than or equal to a second container number limit;
   a measure of robot traffic density above the second one of the vertical storage columns being below a traffic density limit;
   a robot travelling distance between the first one of the vertical columns and the second one of the vertical columns being below a robot travelling distance limit;
   a distance of the second position from a top of the storage grid being less than or equal to a second storage depth limit;
   an average height of stacked containers in the second one of the vertical columns, as determined over a predetermined averaging time, being below an average stack height limit; and
   a horizontal distance of the second position from a packing station or port being above a port distance threshold.
Clause 8. The method of clause 7, wherein one or more of the projections are based upon historical operating records.
Clause 9. The method of clause 7, wherein the third weight limit is less than a total weight of containers supported by the identified container when at the first position.
Clause 10. The method of clause 7, wherein the second storage depth limit is predetermined, or is selected to be less than a distance from the first position to the top of a stack of containers in the first one of the vertical columns.
Clause 11. The method of any one of clauses 1 to 10, further comprising storing, for each storage container, a history of stress experienced by it versus time, and based on the history, adjusting one or more of the first set of criteria and/or one or more of the second set of criteria based on the history.
Clause 12. The method of any one of clauses 7 to 11, wherein one or more of the limits involved in the second set of criteria is adjusted according to a temperature at which the identified container has been stored at in the first position.
Clause 13. The method of any one of clauses 7 to 12, wherein one or more of the limits involved in the second set of criteria is adjusted according to a temperature at which the identified container will be stored at in the second position.
Clause 14. The method of any one of clauses 1 to 13, further comprising storing, for each storage container, a history of stress experienced by it versus time, and based on the history, making a maintenance decision relating to the respective storage container based on that stored information.
Clause 15. The method of any one of clauses 1 to 14, further comprising identifying each storage container with a unique identifier.
Clause 16. The method of clause 15, wherein the unique identifier is attached to a respective storage container using at least one or a barcode and an RFID tag.
Clause 17. The method of any one of clauses 4 to 16, wherein the step of identifying is based upon all of the criteria of the first set of criteria being met.
Clause 18. The method of any one of clauses 7 to 17, wherein the second position is a position in the grid at which all of the criteria of the second set of criteria are met.
Clause 19. The method of any one of clauses 1 to 18, wherein the method further comprises determining a vertical position in the grid below which a total weight of containers stacked above that vertical position in a respective stack is statistically determined to be likely above a threshold weight which if exceeded can result in containers lower in the stack being damaged over a predetermined time period, and wherein the first set of criteria comprises the first position being at or below that determined vertical position.
Clause 20. The method of clause 19, wherein the determining is performed separately for each vertical column in the grid.
Clause 21. The method of any one of clauses 1 to 20, wherein the method is repeated each time that a predetermined time period elapses.
Clause 22. The method of any one of clauses 1 to 21, wherein following the step of identifying a storage container for retrieval, the steps of causing the robotic vehicle to retrieve the identified storage container and causing the robotic vehicle to store the identified storage container are deferred until a predetermined number of storage containers have been identified or a scheduled time arrives.
Clause 23. The method of any one of clauses 1 to 22, wherein the method is repeated while it is determined that at least one criterion of the first set of criteria is met.
Clause 24. The method of any one of clauses 1 to 23, wherein the first one of the vertical columns is a different vertical column than the second one of the vertical columns.
Clause 25. A controller for a robotic vehicle for operation in an automated storage and retrieval system, the automated storage and retrieval system comprising a grid, the grid comprising a frame having a plurality of vertical columns formed between vertical frame members, in which vertical columns the storage containers can be stacked on top of each other, wherein the robotic vehicle is enabled to move across the top of the grid between the vertical columns, the robotic vehicle being arranged for lifting storage containers out of the vertical columns and for lowering storage containers into the vertical columns via respective openings above the vertical columns, wherein the controller comprises one or more processors programmed to carry out a method according to that defined in any one of clauses 1 to 24.
Clause 26. An automated storage and retrieval system comprising a grid, the grid comprising a frame having a plurality of vertical columns formed between vertical frame members, in which vertical columns the storage containers can be stacked on top of each other, the system further comprising one or more robotic vehicles enabled to move across the top of the grid between the vertical columns, the one or more robotic vehicles being arranged for lifting storage containers out of the vertical columns and for lowering storage containers into the vertical columns via respective openings above the vertical columns, and the automated storage and retrieval system further comprising one or more processors programmed to carry out the method of any one of clauses 1 to 24.
Clause 27. A computer program comprising instructions which, when executed by a processor of a device, cause the device to perform the method of any one of clauses 1 to 24.
Clause 28. A computer-readable medium storing the computer program of clause 27.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

### Glossary

10 - automated storage and retrieval system
100 - grid
102 - vertical column
102a, 102b - first and second vertical columns
104 - vertical frame member
112 - bin / container
116 - rail system
122 - robotic vehicle
124 - vertical column access openings
125a, 125b - first and second storage positions
126, 128 - port column
130, 132 - port
202 - cantilever type of robot
204 - internal cavity type of robot
206 - rails / tracks
300 - body
302 - first set of wheels
303 - additional set of wheels
304, 312 - lifting device
306 - cantilever element
308- gripping device
310 - internal cavity

## Claims

1. A method of operating a robotic vehicle in an automated storage and retrieval system, the automated storage and retrieval system comprising a grid, the grid comprising a frame having a plurality of vertical columns in which storage containers can be stacked on top of each other, said vertical columns being between vertical frame members of the grid, wherein the robotic vehicle is enabled to move across the top of the grid between the vertical columns, the robotic vehicle being arranged for retrieving storage containers by lifting them out of the vertical columns and for storing storage containers by lowering them into the vertical columns, wherein the method comprises:
identifying for retrieval, a storage container that is stored at a first position in a first one of the vertical columns of the grid, wherein the identifying is based upon at least one criterion of a first set of criteria being met;
causing the robotic vehicle to retrieve the identified storage container from the first position; and
causing the robotic vehicle to store the identified storage container at a second position different from the first position, in a second one of the vertical columns of the grid.

2. The method of claim 1, wherein the first one of the vertical columns is a different vertical column than the second one of the vertical columns.

3. The method of any one of claims 1 and 2, wherein the second position is selected to be a position in the grid where it is determined that reduced stress will be experienced by the identified storage container at least for a period of time, compared with stress experienced by the identified storage container when stored at the first position.

4. The method of any one of claims 1 to 3, wherein the first set of criteria comprises one or more of:
a time for which the identified container has been stored at the first position exceeding a first time period;
a weight supported by the identified container, that weight being a total weight of containers above the identified container in the first one of the vertical columns, exceeding a first weight limit at the first position;
a weight supported by the identified container, that weight being a total weight of containers above the identified container in the first one of the vertical columns, exceeding a second weight limit at the first position for a second time period, wherein the second weight limit is lower than the first weight limit;
a combination of a weight supported by the identified container at the first position, and a time for which the identified container has been stored at the first position, exceeding a combined threshold;
a number of containers supported by the identified container at the first position exceeding a first container number limit; and
a distance of the first position from a top of the storage grid being greater than or equal to a first storage depth limit.

5. The method of any one of claims 1 to 4, wherein one or more of the criteria in the first set is adjusted according to a temperature at which the identified container is stored at in the first position.

6. The method of any one of claims 1 to 5, wherein the second position is a position in the grid at which at least one criterion of a second set of criteria are met, wherein the second set of criteria comprises one or more of:
a total weight of containers in the second one of the vertical columns above the second position being projected to be less than a total weight of containers in the first one of the vertical columns above the first position, at least for a predetermined time period;
a total weight of containers projected to be supported by the identified container at the second position in the second one of the vertical storage columns, at least for a predetermined time period, being less than a third weight limit;
a number of containers projected to be supported by the identified container at the second position being less than a number of containers supported by the identified container at the first position;
a number of containers projected to be supported by the identified container at the second position being less than or equal to a second container number limit;
a measure of robot traffic density above the second one of the vertical storage columns being below a traffic density limit;
a robot travelling distance between the first one of the vertical columns and the second one of the vertical columns being below a robot travelling distance limit;
a distance of the second position from a top of the storage grid being less than or equal to a second storage depth limit;
an average height of stacked containers in the second one of the vertical columns, as determined over a predetermined averaging time, being below an average stack height limit; and
a horizontal distance of the second position from a packing station or port being above a port distance threshold.

7. The method of claim 6, wherein one or more of the projections are based upon historical operating records.

8. The method of any one of claims 1 to 7, further comprising storing, for each storage container, a history of stress experienced by it versus time, and based on the history, adjusting one or more of the first set of criteria and/or one or more of the second set of criteria based on the history.

9. The method of any one of claims 6 to 8, wherein one or more of the limits involved in the second set of criteria is adjusted according to a temperature at which the identified container has been stored at in the first position, and/or according to a temperature at which the identified container will be stored at in the second position.

10. The method of any one of claims 1 to 9, wherein the method further comprises determining a vertical position in the grid below which a total weight of containers stacked above that vertical position in a respective stack is statistically determined to be likely above a threshold weight which if exceeded can result in containers lower in the stack being damaged over a predetermined time period, and wherein the first set of criteria comprises the first position being at or below that determined vertical position, and optionally the determining is performed separately for each vertical column in the grid.

11. The method of any one of claims 1 to 10, wherein following the step of identifying a storage container for retrieval, the steps of causing the robotic vehicle to retrieve the identified storage container and causing the robotic vehicle to store the identified storage container are deferred until a predetermined number of storage containers have been identified or a scheduled time arrives.

12. A controller for a robotic vehicle for operation in an automated storage and retrieval system, the automated storage and retrieval system comprising a grid, the grid comprising a frame having a plurality of vertical columns formed between vertical frame members, in which vertical columns the storage containers can be stacked on top of each other, wherein the robotic vehicle is enabled to move across the top of the grid between the vertical columns, the robotic vehicle being arranged for lifting storage containers out of the vertical columns and for lowering storage containers into the vertical columns via respective openings above the vertical columns, wherein the controller comprises one or more processors programmed to carry out a method according to that defined in any one of claims 1 to 11.

13. An automated storage and retrieval system comprising a grid, the grid comprising a frame having a plurality of vertical columns formed between vertical frame members, in which vertical columns the storage containers can be stacked on top of each other, the system further comprising one or more robotic vehicles enabled to move across the top of the grid between the vertical columns, the one or more robotic vehicles being arranged for lifting storage containers out of the vertical columns and for lowering storage containers into the vertical columns via respective openings above the vertical columns, and the automated storage and retrieval system further comprising one or more processors programmed to carry out the method of any one of claims 1 to 11.

14. A computer program comprising instructions which, when executed by a processor of a device, cause the device to perform the method of any one of claims 1 to 11.

15. A computer-readable medium storing the computer program of claim 14.
